# EUROPEAN PATENT SPECIFICATION

(11) **EP 3 816 226 B1**
(45) Date of publication and mention of the grant of the patent: **06.11.2024**
(21) Application number: 19825681.0
(22) Date of filing: 24.06.2019
(51) Int. Cl.: B32B 27/30, C08L 33/16, C09D 5/02, C09D 7/65, C09D 127/18, D06M 15/256

(54) **POWDER DISPERSION LIQUID, LAMINATE, FILM, AND IMPREGNATED WOVEN FABRIC**
PULVERDISPERSIONSFLÜSSIGKEIT, LAMINAT, FILM UND IMPRÄGNIERTES GEWEBE
LIQUIDE DE DISPERSION DE POUDRE, STRATIFIÉ, FILM ET TISSU TISSÉ IMPRÉGNÉ

(30) Priority: 27.06.2018 JP 2018121873; 25.12.2018 JP 2018240871; 25.12.2018 JP 2018240874
(43) Date of publication of application: 05.05.2021
(73) Proprietor: AGC INC., Chiyoda-ku, Tokyo 1008405 (JP)
(72) Inventor: YAMABE Atsumi, Tokyo 100-8405 (JP); HOSODA Tomoya, Tokyo 100-8405 (JP); KASAI Wataru, Tokyo 100-8405 (JP)
(74) Representative: Müller-Boré & Partner Patentanwälte PartG mbB
(86) International application number: PCT/JP2019/024980
(87) International publication number: WO 2020/004339

(56) References cited:
- EP-A1- 3 489 299
- WO-A1-2011/129407
- WO-A1-2016/017801
- WO-A1-2017/122735
- WO-A1-2017/122740
- WO-A1-2017/122743
- WO-A1-2018/016644
- WO-A1-2018/016644
- WO-A2-2011/014715
- JP-A- 2004 331 938
- JP-A- 2005 075 880
- JP-A- 2008 260 864
- JP-A- 2011 225 710
- US-A1- 2018 282 500
- US-A1- 2018 298 155

## Description

### TECHNICAL FIELD

The present invention relates to a powder dispersion, a laminate, a film and an impregnated woven fabric.

### BACKGROUND ART

Fluoroolefin polymers such as polytetrafluoroethylene (PTFE), a copolymer of tetrafluoroethylene and a perfluoro(alkyl vinyl ether) (PFA) and a copolymer of tetrafluoroethylene and hexafluoropropylene (FEP) are excellent in physical properties such as mold release properties, electrical properties, water/oil repellency, chemical resistance, weather resistance and heat resistance, and are utilized for various industrial applications by virtue of such physical properties.

Among them, a dispersion having a powder of a fluoroolefin polymer dispersed in a liquid dispersion medium, when applied to a surface of a substrate, can impart physical properties of the fluoroolefin polymer to the surface and is thereby useful as a coating agent.

Patent Documents 1 and 2 disclose a method of applying a dispersion containing a powder of PTFE and a powder of PTA which is a thermoplastic fluoropolymer to a surface of a substrate thereby to form a thin film on the surface.

Patent Document 3 discloses a method of applying a dispersion containing a powder of PFA or FEP which is a melt flowable fluoropolymer to a surface of a substrate thereby to form a thin film on the surface.

### PRIOR ART DOCUMENTS

### PATENT DOCUMENTS

Patent Document 1: WO2018/016644
Patent Document 2: WO2008/018400
Patent Document 3: JP-A-2018-48233

### DISCLOSURE OF INVENTION

### TECHNICAL PROBLEM

A fluoroolefin polymer, which essentially has a low surface tension and weak interaction with other materials, tends to be hardly strongly attached to a substrate surface and tends to be hardly compatible with other materials. Such tendency is likely to be remarkable with respect to a powder dispersion of a fluoroolefin polymer, since a formed product (including a formed member such as a layer) is formed by filling and firing of a powder formed by removing a liquid dispersion medium. Further, the formed product is likely to have cracking. Particularly with respect to an aqueous dispersion containing a powder of a fluoroolefin polymer, of which the dispersion property is insufficient, such tendency is likely to be remarkable.

If a different type of fluoroolefin polymer or a different type of material such as other additive, as disclosed in prior art documents, is blended with the powder dispersion, the effects may be insufficient, or physical properties which the fluoroolefin polymer originally has tend to decrease.

Under these circumstance, a powder dispersion of a fluoroolefin polymer capable of forming a formed product (such as a laminate, a film or an impregnated woven fabric) which has strong adhesion and is less likely to have cracking, without impairing physical properties which the fluoroolefin polymer originally has, has been desired.

### SOLUTION TO PROBLEM

The present inventors have conducted extensive studies and as a result, found that such a powder dispersion is a powder dispersion comprising a powder of a first polymer having units based on tetrafluoroethylene and an oxygen-containing polar group, a powder of a second polymer containing units based on a fluoroolefin, wherein the second polymer is a polymer having no oxygen-containing polar group, a dispersing agent, and a liquid dispersion medium, wherein the ratio of the mass content of the first polymer to the mass content of the second polymer is at most 0.7.

The invention also provides a laminate that comprises a polymer layer formed of the powder dispersion and a substrate, a film and a polymer-impregnated woven fabric.

Further embodiments are defined in the appended claims.

### ADVANTAGEOUS EFFECTS OF INVENTION

According to the present invention, it is possible to provide a powder dispersion excellent in dispersibility and storage stability, capable of forming a formed product (such as a laminate, a film or an impregnated woven fabric) which is less likely to have cracking and is excellent in adhesion, without impairing physical properties which the fluoroolefin polymer originally has.

### BRIEF DESCRIPTION OF DRAWINGS

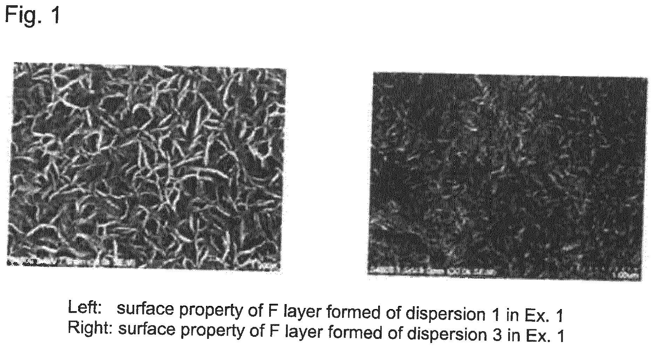

Fig. 1 is SEM images (magnification of 30,000) of a polymer layer surface of a laminate obtained in Ex. 1 of Examples.

### DESCRIPTION OF EMBODIMENTS

The following terms have the following meanings.

The "average particle size (D50) of a powder" is a volume-based cumulative 50% size of a powder, that is a particle size at a point where the cumulative volume is 50% on a cumulative curve obtained by measuring a particle size distribution of the powder by laser diffraction/scattering method and taking the whole volume of the group of particles being 100%.

The "D90 of a powder" is a volume-based cumulative 90% size of a powder obtained in the same manner as the above D50.

The "viscosity of a dispersion" is a viscosity of a dispersion measured by a B type viscometer and is a value measured at 25°C at a number of revolutions of 30 rpm. Measurement is repeatedly conducted three times and an average of the three measured values is taken.

The "thixotropic index of a dispersion" is a value obtained by dividing the viscosity η₁ of the dispersion measured at a number of revolutions of 30 rpm by the viscosity η₂ of the dispersion measured at a number of revolutions of 60 rpm (η₁/η₂).

The "melting temperature (melting point) of a polymer" is a temperature corresponding to the maximum value of a melting peak of the polymer measured by differential scanning calorimetry (DSC).

The "units based on a monomer" generally mean an atomic group directly formed by polymerization of one monomer molecule and an atomic group obtained by chemical conversion of a part of the atomic group. Hereinafter units based on monomer A will sometimes be referred to as monomer A units.

A "(meth)acrylate" generally means an acrylate and a methacrylate.

A first embodiment of the present invention resides in a powder dispersion comprising a powder of a first polymer having units based on tetrafluoroethylene and an oxygen-containing polar group, a powder of a second polymer containing units based on a fluoroolefin, wherein the second polymer is a polymer having no oxygen-containing polar group, a dispersing agent, and a liquid dispersion medium, wherein the ratio of the mass content of the first polymer to the mass content of the second polymer is at most 0.7.

The first polymer and the second polymer are different polymers and thus the powder of the first polymer and the powder of the second powder are different powders.

Hereinafter the above embodiment of the present invention will sometimes be generally referred to as the present invention, and the powder dispersion of the present invention will sometimes be referred to simply as the "dispersion" of the present invention.

In the present invention, hereinafter the first polymer will sometimes be referred to as "polymer I", and the powder of the first polymer as "powder I". Likewise, the second polymer will sometimes be referred to as polymer II", and the powder of the second polymer as "powder II".

Further, hereinafter, tetrafluoroethylene will be abbreviated as "TFE", and units based on TFE will be referred to as "TFE units". Likewise, the abbreviated name of a specific monomer compound is represented in the bracket ( ) after the monomer name and thereafter the abbreviated name is used in some cases.

The dispersion of the present invention comprises powder I of polymer I having TFE units and an oxygen-containing polar group, powder II of polymer II containing units based on a fluoroolefin (hereinafter sometimes referred to as "F units"), a dispersing agent (a fluorinated surfactant having a hydroxy group in the second embodiment of the present invention), and a liquid dispersion medium. In the dispersion of the present invention, the powder I and the powder II are respectively dispersed in the form of particles in the liquid dispersion medium.

By the interaction between the powder I and the powder II, a formed product (such as a laminate, a film or an impregnated woven fabric, including a formed member such as a polymer layer, the same applies hereinafter) formed of the dispersion of the present invention has strong adhesion and crack resistance, and the properties of the polymer II are hardly impaired.

The reason is not necessarily clearly understood, but is estimated as follows. That is, when a formed product is to be formed, not only the polymer I and the polymer II are both fluoropolymers and are easily bonded by fusion, but also a denser matrix is formed by the oxygen-containing polar group of the polymer I, whereby the polymer chain is likely to be entangled. As a result, the adhesion and the crack resistance of the formed product are synergistically improved.

Further, in the first embodiment of the present invention, the proportion of the mass content of the polymer I to the mass content of the polymer II is in a predetermined low proportion, and thus the physical properties which the polymer II originally has are less likely to be impaired in the formed product.

Accordingly, the entire polymers are highly interacted, and thus a formed product excellent in crack resistance will be formed without impairing the properties of the polymer II.

The powder I in the present invention is a powder containing the polymer I and preferably consists of the polymer I. The mass content of the polymer I in the powder I is preferably at least 80 mass%, particularly preferably 100 mass%.

D50 of the powder I is preferably from 0.01 to 75 µm, more preferably from 0.05 to 25 µm, particularly preferably from 0.05 to 8 µm, further preferably from 0.1 to 4 µm. As a preferred embodiment of D50 of the powder I, an embodiment of at least 0.1 and less than 1 µm, or an embodiment of from 1 to 4 µm may be mentioned. D90 of the powder I is larger than D50 of the powder I. As a preferred embodiment of D90 of the powder I, an embodiment of from 0.3 to 3 µm or an embodiment of from 2 to 6 µm may be mentioned.

In such a case, the dispersibility of the powder I and the interaction between the powders will be favorable, and the adhesion and the crack resistance of the formed product and physical properties of the polymer II will further be improved.

Particularly when D50 of the powder I is at least 0.1 µm and less than 1 µm, the dispersibility of the dispersion will be higher, and a formed product excellent also in mechanical strength such as stretchability tends to be obtained. When D50 of the powder I is from 1 to 4 µm, a formed product excellent in crack resistance tends to be obtained.

The oxygen-containing polar group of the polymer I in the present invention may be contained in units based on a monomer having an oxygen-containing polar group (hereinafter sometimes referred to as "polar monomer", may be contained in the polymer terminal group, or may be contained in a polymer by a surface treatment (such as radiation treatment, electron beam treatment, corona treatment or plasma treatment). The oxygen-containing polar group is preferably contained in the units of the polar monomer. Further, the oxygen-containing polar group may be a group prepared by modifying a polymer having a group capable of forming an oxygen-containing polar group. The oxygen-containing polar group contained in the polymer terminal group may be obtained by adjusting components (e.g. a polymerization initiator or a chain transfer agent) used for polymerization to obtain the polymer.

The oxygen-containing polar group is a polar atomic group containing an oxygen atom. The oxygen-containing polar group does not include an ester bond itself and an ether bond itself, and includes an atomic group containing such a bond as a functional group.

The oxygen-containing polar group is preferably a hydroxy group-containing group, a carbonyl group-containing group, an acetal group, a phosphono group (-OP(O)OH₂) or an oxacycloalkyl group. The polymer I may have two or more types of oxygen-containing polar groups.

The hydroxy group-containing group is preferably a group containing an alcoholic hydroxy group, particularly preferably -CF₂CH₂OH-, -C(CF₃)₂OH or a 1,2-glycol group (-CH(OH)CH₂OH).

The carbonyl group-containing group is a group containing a carbonyl group (>C(O)). The carbonyl group-containing group is preferably -CF₂C(O)OH, -CF₂C(O)OCH₃, >CFC(O)OH, a carbamate group (-OC(O)NH₂), an amide group (such as -C(O)NH₂), an acid anhydride residue (such as -C(O)OC(O)-), an imide residue (such as -C(O)NHC(O)-), a dicarboxylic acid residue (such as -CH(C(O)OH)CH₂C(O)OH) or a carbonate group (-OC(O)O-).

The oxacycloalkyl group is preferably an epoxy group or an oxetanyl group.

The oxygen-containing polar group is preferably a carbonyl group-containing group, more preferably an acid anhydride residue, an imide residue or a carbonate group. In view of excellent adhesion and crack resistance and with a view to not impairing physical properties of the polymer II in the formed product, it is further preferably a cyclic acid anhydride residue, a cyclic imide residue or a cyclic carbonate group, which is a cyclic oxygen-containing polar group, most preferably a cyclic acid anhydride residue. At least a part of such a cyclic oxygen-containing polar group may be open.

The polymer I in the present invention is preferably a polymer containing TFE units, unites based on hexafluoropropylene (HFP), a perfluoro(alkyl vinyl ether) (PAVE) or a fluoroalkylethylene (FAE) (hereinafter units based on such monomers will sometimes be referred to as "PAE units") and units of a polar monomer.

The proportion of the TFE units to all units constating the polymer I is preferably from 50 to 99 mol%, particularly preferably from 90 to 99 mol%.

The PAE units are preferably PAVE units and HFP units, particularly preferably PAVE units. The polymer I may have two or more types of PAE units.

The proportion of the PAE units to all units constituting the polymer I is preferably from 0 to 10 mol%, particularly preferably from 0.5 to 9.97 mol%.

PAVE may be CF₂=CFOCF₃(PMVE), CF₂=CFOCF₂CF₃, CF₂=CFOCF₂CF₂CF₃(PPVE), CF₂=CFOCF₂CF₂CF₂CF₃ or CF₂=CFO(CF₂)₈F, and is preferably PMVE or PPVE.

The proportion of the PAE units to all units constituting the polymer I is preferably from 0.5 to 9.97 mol%.

FAE may be CH₂=CH(CF₂)₂F (PFEE), CH₂=CH(CF₂)₃F, CH₂=CH(CF₂)₄F (PFBE), CH₂=CF(CF₂)₃H or CH₂=CF(CF₂)₄H, and is preferably PFBE or PFEE.

The units of the polar monomer are preferably units based on a monomer having a hydroxy group-containing group, a carbonyl group-containing group, an acetal group, a phosphono group (=OP(O)OH₂) or an oxacycloalkyl group. The polymer I may have two or more types of the units of the polar monomer.

The proportion of the units of the polar monomer is preferably from 0 to 5 mol%, particularly preferably from 0.01 to 3 mol%.

The polar monomer is preferably itaconic anhydride, citraconic anhydride, 5-norbornene-2,3-dicarboxylic acid anhydride (another name: himic anhydride, hereinafter sometimes referred to as "NAH") or maleic anhydride, particularly preferably NAH.

Further, the polymer I may further contain units other than the TFE units, the PAE units and the units of the polar monomer. The monomer forming other units may be ethylene, propylene, vinyl chloride, vinylidene chloride, vinyl fluoride, vinylidene fluoride or chlorotrifluoroethylene.

The proportion of such other units in the polymer I to all units constituting the polymer I is preferably from 0 to 50 mol%, particularly preferably from 0 to 40 mol%.

The melting temperature of the polymer I is preferably from 140 to 320°C, more preferably from 200 to 320°C, particularly preferably from 260 to 320°C. In such a case, the fusion properties of the polymer I and the polymer I are well balanced, and the resulting formed product tends to have further improved physical properties.

Specific examples of the polymer I may be polymers disclosed in WO2018/16644.

The powder II in the present invention is a powder containing the polymer II, and preferably consists of the polymer II. The mass content of the polymer II in the powder II is preferably at least 80 mass%, particularly preferably 100 mass%. In a case where components (such as a surfactant) used for production of the polymer II are contained in the powder II, such components are not included as the component of the powder II.

D50 of the powder II is preferably from 0.01 to 100 µm, particularly preferably from 0.1 to 10 µm. As a preferred embodiment of D50 of the powder II, an embodiment of from 0.1 to 1 µm or an embodiment of larger than 1 µm and at most 10 µm may be mentioned. D90 of the powder II is larger than D50 of the powder II. As a preferred embodiment of D90 of the powder II, an embodiment of from 0.1 to 2 µm or an embodiment of larger than 1 µm and at most 10 µm may be mentioned.

In such a case, the dispersibility of the powder II and the interaction between the powder I and the powder II may be good, and the resulting formed product tends to have improved physical properties.

The polymer II in the present invention is a polymer different from the polymer I, containing fluoroolefin units. The polymer II is a polymer containing no oxygen-containing polar group.

The fluoroolefin is preferably TFE or VDF, particularly preferably TFE. The polymer II may have two or more types of fluoroolefin units.

The polymer II is preferably polytetrafluoroethylene (PTFE), a copolymer of TFE and PAVE (PFA), a copolymer of TFE and HFP (FEP), a copolymer of TFE and ethylene (ETFE) or polyvinylidene fluoride (PVDF), particularly preferably PTFE.

PTFE includes, in addition to a TFE homopolymer, a so-called modified PTFE which is a copolymer of TFE and a very small amount of a comonomer (e.g. PAVE, HFP or FAE). Further, PFA may contain units based on a monomer other than TFE and PAVE. The same applies to other copolymers (FEP, ETFE and PVDF).

PTFE is preferably a TFE homopolymer (having non-melt-forming property) or non-melt-formable modified PTFE. The non-melt-formable modified PTFE preferably contains from 0.001 to 0.05 mol% of units based on the comonomer to all units. The "non-melt-forming property" means that the polymer is not melt-formable, that is, the polymer does not have melt flowability. Specifically, it means a melt flow rate measured in accordance with ASTM D3307 at a measurement temperature of 372°C under a load of 49N of less than 0.5 g/10 min.

As described above, not only a formed product obtained from the dispersion of the present invention has strong adhesion and crack resistance but also physical properties of the original polymer (polymer II) are less likely to be impaired. For example, in a case where the polymer II is PTFE, in the formed product, the fibrous surface properties and porosity which a formed product of PTFE originally have are less likely to be impaired.

The proportion of the fluoroolefin units in the polymer II to all units is preferably at least 99.5 mol%, more preferably at least 99.9 mol%.

The polymer II is preferably a polymer obtained by subjecting the fluoroolefin to emulsion polymerization in water. The powder II containing such a polymer II is a powder having the polymer obtained by emulsion polymerization of the fluoroolefin in water, dispersed as the powder in water. When such a powder is used, the powder dispersed in water may be used as it is, or the powder may be recovered from water and used.

The polymer II may be modified by plasma treatment or radiation exposure. The method of plasma treatment of radiation exposure may be a method disclosed in e.g. WO2018/026012 or WO2018/026017.

The polymer II may be commercially available as the powder or its dispersion.

The relation of D50 of the powder I and D50 of the powder II in the present invention is preferably such that the former is from 0.05 to 75 µm, and the latter is from 0.01 to 100 µm. As more preferred specific examples, an embodiment such that D50 of the powder I is at least 0.1 and less than 1 µm and D50 of the powder II is from 0.1 to 1 µm, or an embodiment such that D50 of the powder I is from 1 to 4 µm and D50 of the powder II is from 0.1 to 1 µm may be mentioned. In the former embodiment, the dispersion is particularly excellent in storage stability, and in the latter embodiment, the formed product is particularly excellent in crack resistance.

The ratio of the mass content of the polymer I to the mass content of the polymer II (mass content of polymer l/mass content of polymer II) in the dispersion according to the first embodiment of the present invention is at most 0.7. The ratio is preferably at least 0.01, more preferably at least 0.05, particularly preferably at least 0.1. The ratio is preferably at most 0.5, more preferably at most 0.4, particularly preferably at most 0.3. The ratio is preferably from 0.01 to 0.5, more preferably from 0.05 to 0.4, particularly preferably from 0.1 to 0.3. In such a case, the dispersibility of the powder and the interaction between the powders will be favorable, and the physical properties of the formed product tend to be well balanced.

The total mass content of the polymer I and the polymer II in the dispersion of the present invention is preferably from 20 to 70 mass%, particularly preferably from 30 to 60 mass%.

The dispersing agent in the present invention is a surfactant different from the polymer I and the polymer II and is a component to improve the dispersibility of the polymer I and the polymer II and to improve the forming properties (coating property, film-forming property, etc.) of the dispersion of the present invention. Components contained in the polymer I or II used to produce the polymer (for example, surfactant used for emulsion polymerization of the fluoroolefin) do not correspond to the dispersing agent in the present invention. The fluorinated surfactant having a hydroxy group described below is also a dispersing agent.

The dispersing agent is preferably a compound having a hydrophobic moiety and a hydrophilic moiety and may be an acetylene surfactant, a silicone surfactant or a fluorinated surfactant. The dispersing agent is preferably a fluorinated surfactant, particularly preferably a fluorinated surfactant having a hydroxy group. The dispersing agent is preferably nonionic.

The fluorinated surfactant having a hydroxy group may be a fluorinated surfactant having one hydroxy group or a fluorinated surfactant having two or more hydroxy groups. The hydroxy group is preferably an alcoholic hydroxy group.

The fluorinated surfactant having a hydroxy group preferably has a fluorine content of from 10 to 50 mass%, and a hydroxy value of preferably from 10 to 100 mgKOH/g.

The fluorinated surfactant having one hydroxy group is a non-polymer type fluorinated surfactant, and preferably has a fluorine content of from 10 to 50 mass% and preferably has a hydroxy group of from 40 to 100 mgKOH/g. The fluorine content is more preferably from 10 to 45 mass%, particularly preferably from 15 to 40 mass%. The hydroxy value is more preferably from 50 to 100 mgKOH/g, particularly preferably from 60 to 100 mgKOH/g. As a preferred embodiment of the fluorinated surfactant having one hydroxy group, an alkylene oxide adduct of a polyfluoroalkyl monool may be mentioned.

The fluorinated surfactant having two or more hydroxy groups is preferably a polymer type fluorinated surfactant, and preferably has a fluorine content of from 10 to 45 mass% and preferably has a hydroxy group of from 10 to 60 mgKOH/g. The hydroxy value is more preferably from 10 to 35 mgKOH/g, particularly preferably from 10 to 30 mgKOH/g, still more preferably from 10 to 25 mgKOH/g. As a preferred embodiment of the fluorinated surfactant having two or more hydroxy groups, a copolymer of a monomer having a polyfluoroalkyl group or a polyfluoroalkenyl group and a monomer having an alcoholic hydroxy group may be mentioned.

As the fluorinated surfactant having one hydroxy group, a compound presented by the formula R^{a}-(OQ^{a})ₘₐ-OH is preferred.

The symbols in the formula have the following meanings.

R^{a} is a polyfluoroalkyl group or a polyfluoroalkyl group having an etheric oxygen atom, and is preferably -(CF₂)₄F, -(CF₂)₆F, -CH₂CF₂OCF₂CF₂OCF₂CF₃ or -CH₂CF(CF₃)CF₂OCF₂CF₂CF₃.

Q^{a} is a C₁₋₄ alkylene group and is preferably an ethylene group (-CH₂ CH₂-) or a propylene group (-CH₂ CH(CH₃)-). Q^{a} may comprise two or more types of groups. When it comprises two or more types of groups, the arrangement of the groups may be random or in a block.

ma is an integer of from 4 to 20, preferably from 4 to 10.

The hydroxy group is preferably a secondary hydroxy group or a tertiary hydroxy group and is particularly preferably a secondary hydroxy group.

As specific examples of the fluorinated surfactant having one hydroxy group, F(CF₂)₆CH₂(OCH₂CH₂)₇OCH₂CH(CH₃)OH, F(CF₂)₆CH₂(OCH₂CH₂)₁₂OCH₂CH(CH₃)OH, F(CF₂)₆CH₂CH₂(OCH₂CH₂)₇OCH₂CH(CH₃)OH, F(CF₂)₆CH₂CH₂(OCH₂CH₂)₁₂OCH₂CH(CH₃)OH, and F(CF₂)₄CH₂CH₂(OCH₂CH₂)₇OCH₂CH(CH₃)OH may be mentioned.

As the fluorinated surfactant having one hydroxy group, commercial products (e.g. manufactured by Archroma, "Fluowet N083" and "Fluowet N050") may be available.

The fluorinated surfactant having two or more hydroxy groups is preferably a polymer having a perfuoroalkyl group or a perfluoroalkenyl group, a polyoxyalkylene group and an alcoholic hydroxy group in its side chains, more preferably a copolymer of a monomer represented by the following formula (f) (hereinafter referred to as "monomer (f)") and a monomer represented by the following formula (d) (hereinafter referred to as "monomer (d)") (hereinafter referred to as "polymer (fd)").

Formula (f): CH₂=CR^{f}C(O)O-X^{f}-Z^{f}

Formula (d): CH₂=CR^{d}C(O)O-(Q^{d})_{dn}-H

The symbols in the formula have the following meanings.

R^{f} is a hydrogen atom or a methyl group.

X^{f} is an alkylene group, an oxyalkylene group or an alkyleneamide group, and is preferably -CH₂-, -(CH₂)₂-, -(CH₂)₂O-, -(CH₂)₄O-, -(CH₂)₂NHC(O)-, -(CH₂)₃NHC(O)- or -CH₂CH(CH₃)NHC(O)-.

Z^{f} is a perfluoroalkyl group or a perfluoroalkenyl group, and is preferably -CF(CF₃)(C(CF(CF₃)₂)(=C(CF₃)₂)), -C(CF₃)=C(CF(CF₃)₂)₂, -(CF₂)₄F or -(CF₂)₆F.

R^{d} is a hydrogen atom or a methyl group.

Q^{d} is an oxyalkylene group, and is preferably -CH₂O-, -CH₂CH₂O-, -CH₂CH₂CH₂O-, -CH(CH₃)CH₂O-, -CH₂CH(CH₃)CH₂O- or -CH₂CH₂CH₂CH₂O-. When dn is at least 2, (Q^{d})_{dn} may comprise two or more types of oxyalkylene groups. The direction of the binding species of the oxyalkylene group is such that the oxygen atom side is on the Z^{d} side.

dn is an integer of from 1 to 30, preferably from 4 to 20.

As specific examples of the monomer (f), CH₂=CHC(O)OCH₂CH₂(CF₂)₄F, CH₂=C(CH₃)C(O)OCH₂CH₂(CF₂)₄F, CH₂=CHC(O)OCH₂CH₂(CF₂)₆F, CH₂=C(CH₃)C(O)OCH₂CH₂(CF₂)₆F, CH₂=CHC(O)OCH₂CH₂OCF(CF₃)(C(CF(CF₃)₂)(=C(CF₃)₂)), CH₂=C(CH₃)C(O)OCH₂CH₂OC(CF₃)=C(CF(CF₃)₂)₂, CH₂=CHC(O)OCH₂CH₂CH₂CH₂OCF(CF₃)(C(CF(CF₃)₂)(=C(CF₃)₂)), and CH₂=C(CH₃)C(O)OCH₂CH₂CH₂CH₂OC(CF₃)=C(CF(CF₃)₂)₂ may be mentioned.

As specific examples of the monomer (d), CH₂=CHCOO(CH₂CH₂O)₈OH, CH₂=CHCOO(CH₂CH₂O)₁₀OH, CH₂=CHCOO(CH₂CH₂O)₂₃OH, CH₂=C(CH₃)COO(CH₂CH₂O)₈OH, CH₂=C(CH₃)COO(CH₂CH₂O)₁₀OH, CH₂=C(CH₃)COO(CH₂CH₂O)₂₃OH, CH₂=CHCOOCH₂CH₂CH₂CH₂O(CH₂CH₂O)₈OH, CH₂=CHCOOCH₂CH₂CH₂CH₂O(CH₂CH₂O)₁₀OH, CH₂=CHCOOCH₂CH₂CH₂CH₂O(CH₂CH₂O)₂₃OH, CH₂=C(CH₃)COO(CH₂CH(CH₃)O)₈OH, CH₂=C(CH₃)COO(CH₂CH(CH₃)O)₁₂OH, CH₂=C(CH₃)COO(CH₂CH(CH₃)O)₁₆OH, CH₂=C(CH₃)COOCH₂CH₂CH₂CH₂O(CH₂CH(CH₃)O)₈OH, CH₂=C(CH₃)COOCH₂CH₂CH₂CH₂O(CH₂CH(CH₃)O)₁₂OH, and CH₂=C(CH₃)COOCH₂CH₂CH₂CH₂O(CH₂CH(CH₃)O)₁₆OH may be mentioned.

The proportion of the units of the monomer (f) to all units contained in the polymer (fd) is preferably from 20 to 60 mol%, particularly preferably from 20 to 40 mol%.

The proportion of the units of the monomer (d) to all units contained in the polymer (fd) is preferably from 40 to 80 mol%, particularly preferably from 60 to 80 mol%.

The ratio of the proportion of the units of the monomer (d) to the proportion of the units of the monomer (f) in the polymer (fd) is preferably from 1 to 5, particularly preferably from 1 to 2.

The polymer (fd) may consist solely of the units of the monomer (f) and the units of the monomer (d), or may further contain other units.

The fluorine mass content in the polymer (fd) is preferably from 10 to 45 mass%, particularly preferably from 15 to 40 mass%.

The polymer (fd) is preferably nonionic.

The polymer (fd) has a mass average molecular weight of preferably from 2,000 to 80,000, particularly preferably from 6,000 to 20,000.

The mass content of the dispersing agent in the dispersion of the present invention is preferably from 0.01 to 10 mass%, particularly preferably from 0.1 to 5 mass%. In such a case, dispersibility of the powder I and the powder II in the dispersion is particularly favorable, and the dispersibility and the physical properties of the formed product tend to be balanced.

In a case where the dispersing agent is a fluorinated surfactant having a hydroxy group, the mass content of the dispersing agent in the dispersion of the present invention is more preferably at most 1 mass% and may be at most 0.01 mass%.

Further, in a case where the dispersing agent is a fluorinated surfactant having a hydroxy group, the ratio of the mass of the fluorinated surfactant having a hydroxy group to the total mass of the polymer II and the polymer I in the dispersion of the present invention is preferably at most 0.1, more preferably at most 0.08, further more preferably at most 0.05. By using the fluorinated surfactant having a hydroxy group in such an amount, the dispersibility and forming properties of the dispersion can further be improved.

The liquid dispersion medium in the present invention is a compound which is liquid at 25°C and is unreactive with the polymer I and the polymer II, and is a compound which can readily be removed e.g. by heating.

The liquid dispersion medium may be water, an alcohol (such as methanol, ethanol or isopropanol, an amide (such as N,N-dimethylformamide, N,N-dimethylacetamide, 3-methoxy-N,N-dimethylpropanamide, 3-butoxy-N,N-dimethylpropanamide or N-methyl-2-pyrrolidone), a sulfoxide (such as dimethyl sulfoxide), an ether (such as diethyl ether or dioxane), an ester (such as ethyl lactate or ethyl acetate), a ketone (methyl ethyl ketone, methyl isopropyl ketone, cyclopentanone or cyclohexanone), a glycol ether (such as ethylene glycol monoisopropyl ether) or a cellosolve (such as methyl cellosolve or ethyl cellosolve). The liquid medium may be used alone or in combination of two or more.

The liquid dispersion medium is preferably an aqueous dispersion medium (dispersion medium containing water). The aqueous dispersion medium may consist solely of water or may consist of water and a water-soluble organic dispersion medium (water-soluble organic compound).

The content of water in the aqueous dispersion medium is preferably at least 80 mass%, more preferably at least 95 mass%, particularly preferably at least 99 mass%. The content of water is preferably at most 100 mass%.

The water-soluble organic dispersion medium is preferably an alcohol, an amide or a ketone, more preferably an amide or a ketone, particularly preferably N,N-dimethylformamide, 3-methoxy-N,N-dimethylpropanamide, N-methyl-2-pyrrolidone, methyl ethyl ketone or cyclohexanone.

The liquid dispersion medium of the dispersion of the present invention is preferably an aqueous dispersion medium, particularly preferably an aqueous dispersion medium having a pH of from 5 to 7. When the dispersion liquid is neutral to weak acidic, stability of the dispersing agent in the dispersion will improve, and the long term storage stability will improve. Particularly when the dispersion is a fluorinated surfactant having a hydroxy group, such tendency will be remarkable, and the color change of the dispersion by modification of the dispersing agent will be more suppressed.

In order to adjust the pH of the dispersion, the dispersion of the present invention may contain ammonia or an amine.

The amine may, for example, be specifically an alkanolamine such as ethanolamine, a secondary amine such as dimethylamine or diethylamine, a tertiary amine such as triethylamine or N-methylmorpholine, or a quaternary ammonium hydroxide such as tetramethylammonium hydroxide or tetramethylammonium hydroxide.

The proportion of the liquid dispersion medium in the dispersion of the present invention is preferably from 15 to 65 mass%, particularly preferably from 25 to 50 parts by mass. In such a case, the coating property of the dispersion will be excellent, and the resulting formed product is less likely to have appearance failure.

The dispersion of the present invention may contain, within a range not to impair the effects of the present invention, a material other than the polymer I, the polymer II, the dispersing agent and the liquid dispersion medium. Other material may, for example, be a thixotropy-imparting agent, a filler, a defoaming agent, a dehydrating agent, a plasticizer, a weathering agent, an antioxidant, a thermal stabilizer, a lubricant, an antistatic agent, a brightening agent, a coloring agent, a conductive agent, a mold release agent, a surface treatment agent, a viscosity-adjusting agent or a flame retardant. Such other material may or may not be soluble in the dispersion.

Other material may be a thermosetting resin (such as an epoxy resin, a thermosetting polyimide resin, a polyimide precursor (polyamic acid), an acrylic resin, a phenol resin, a polyester resin, a polyolefin resin, a modified polyphenylene ether resin, a bismaleimide resin, a polyfunctional cyanate resin, a polyfunctional maleimide/cyanate resin, a polyfunctional maleimide resin, a vinyl ester resin, a urea resin, a diallyl phthalate resin, a melamine resin, a guanamine resin or a melamine/urea co-condensed resin), a hot melt resin (such as a polyester resin, a polyolefin resin, a polystyrene resin, a polycarbonate, a thermoplastic polyimide, a polyarylate, a polysulfone, a polyarylsulfone, an aromatic polyamide, an aromatic polyetheramide, polyphenylene sulfide, polyaryl ether ketone, polyamideimide, liquid crystalline polyester or polyphenylene ether), a reactive alkoxysilane or carbon black.

As other material, an inorganic filler may also be mentioned, and more specifically, hollow inorganic microspheres such as glass microspheres or ceramic microspheres may also be mentioned.

The glass microspheres are preferably one containing silica glass or borosilicate glass.

The ceramic microspheres are preferably one containing barium titanate, particularly preferably one containing barium titanate doped with neodymium or zinc oxide.

The hollow inorganic microspheres are preferably adjusted to have a dielectric constant of at least 4 and a dielectric constant thermal coefficient of at most 150 ppm/°C at from 20 to 50°C. For such adjustment, two or more types of hollow inorganic microspheres may be used.

The hollow inorganic microspheres may be non-porous or may be porous.

The hollow inorganic microspheres may be crystalline or non-crystalline.

The hollow inorganic microspheres preferably have a density of from 0.1 to 0.8 g/cm³, and an average particle size of from 5 to 100 µm.

The hollow inorganic microspheres are preferably hydrophobic by coating treatment with a silane coupling agent (such as phenyltrimethoxysilane, phenyltriethoxysilane, (3,3,3-trifluoropropyl)trimethoxysilane, (tridecafluoro-1,1,2,2-tetrahydrooctyl)-1,1-triethoxysilane or (heptadecafluoro-1,1,2,2-tetrahydrodecyl)-1-triethoxysilane), a zirconate (such as neopentyl(diallyl)oxy tri(dioctyl)pyrophosphate zirconate or neopentyl(diallyl)oxy tri(N-ethylenediamino)ethyl zirconate), or a titanate (such as neopentyl(diallyl)oxy trineodecanoyl titanate, neopentyl(diallyl)oxy tri(dodecyl)benzene-sulfonyl titanate or neopentyl(diallyl)oxy tri(dioctyl)phosphate titanate).

The dispersion of the present invention containing hollow inorganic microspheres is useful as a material forming a printed board material excellent in electrical properties. For example, a resin-provided metal foil having a polymer layer formed by applying the dispersion to a surface of a copper foil and removing the liquid dispersion medium, is suitably used as a material for a printed board having a low dielectric constant and a low linear expansion coefficient.

The viscosity of the dispersion according to the first embodiment of the present invention is preferably at most 10,000 mPa·s, more preferably from 50 to 10,000 mPa·s, further preferably from 70 to 5,000 mPa·s, particularly preferably from 150 to 1,000 mPa·s. In such a case, the dispersion stability of the dispersion and the coating property will be balanced, and a film can easily be formed from the dispersion.

The viscosity of the dispersion according to the second embodiment of the present invention is preferably from 1 to 1,000 mPa s, more preferably from 5 to 500 mPa·s, particularly preferably from 10 to 200 mPa s. In such a case, the dispersion stability of the dispersion and the coating property of the dispersion will be balanced.

The thixotropic index (η₁/ η₂) calculated by dividing the viscosity η₁ measured at a number of revolutions of 30 rpm by the viscosity η₂ measured at a number of revolutions of 60 rpm of the dispersion according to the first embodiment of the present invention, is preferably from 1.0 to 2.2. The thixotropic index of the dispersion according to the second embodiment of the present invention is preferably from 0.8 to 2.2. In such a case, the dispersion stability of the dispersion and the coating property will be balanced, and a film can easily be formed from the dispersion.

The dispersion of the present invention may be produced by mixing the powder I, the powder II, the dispersing agent and the liquid dispersion medium.

As a method for producing the dispersion of the present invention, a method of mixing a dispersion containing the powder I, the dispersing agent and the liquid dispersion medium and having the powder I dispersed in the liquid dispersion medium (hereinafter referred to as dispersion (p1)) and a dispersion containing the powder II and the liquid dispersion medium and having the powder II dispersed in the liquid dispersion medium (hereinafter referred to as dispersion (p2)).

The dispersion (p1) and the dispersion (p2) are mixed preferably in a well dispersed state. For example, in a case where sediment is confirmed in the dispersion (p1), it is preferred to subject the dispersion (p1) to dispersing treatment by a homodisper and further to dispersing treatment by a homogenizer to improve the dispersion state, immediately before mixing. Particularly when the dispersion (p1) stored at from 0 to 40°C is used, such dispersion treatments are preferably conducted. By applying only the dispersion (p1) having been subjected to such dispersion treatments to the surface of a substrate and removing the liquid dispersion medium, a more uniform and more homogeneous polymer layer containing the polymer I may be formed on the surface of the substrate.

As a preferred embodiment of the liquid dispersion medium in each of the dispersion (p1) and the dispersion (p2), water may be mentioned. Further, as a preferred embodiment in a case where the dispersing agent for the dispersion (p1) is a fluorinated surfactant having a hydroxy group (particularly the polymer (fd)), an embodiment such that the liquid dispersion medium in the dispersion (p1) is an amide or a ketone and the liquid dispersion medium in the dispersion (p2) is water may also be mentioned.

The dispersion of the present invention is excellent in dispersion stability and storage stability, and a formed product excellent in crack resistance and having strong adhesion can be formed without impairing the physical properties of the original fluoroolefin polymer (polymer II).

By applying the dispersion of the present invention to the surface of a substrate, followed by heating to form a polymer layer containing the polymer I and the polymer II, a laminate (the laminate of the present invention) having the substrate and a polymer layer containing the polymer I and the polymer II (hereinafter sometimes referred to as "F layer") can be formed. The F layer contains the polymer I and the polymer II, and has a ratio of the mass content of the polymer I to the mass content of the polymer II of preferably at most 0.7.

In production of the laminate of the present invention, the polymer I, the powder I, the polymer II, the powder II, the dispersing agent and the liquid dispersion medium are as defined for the dispersion of the present invention, including their preferred embodiments. Further, in production of the laminate of the present invention, the F layer should be formed on at least one surface of the substrate, and the F layer may be formed only on one surface of the substrate, or the F layer may be formed on both surfaces of the substrate. The surface of the substrate may be surface-treated with e.g. a silane coupling agent.

As a method of applying the dispersion, spray coating method, roll coating method, spin coating method, gravure coating method, microgravure coating method, gravure offset method, knife coating method, kiss roll coating method, bar coating method, die coating method, fountain mayer bar method, or slot die coating method may, for example, be mentioned.

The F layer is formed preferably by firing the polymer after the liquid dispersion medium is removed by heating, and is particularly preferably formed by heating the substrate to a temperature at which the liquid dispersion medium is volatilized (preferably a temperature region of from 100 to 300°C) and further heating the substrate to a temperature region at which the polymer is fired (preferably a temperature region of from 300 to 400°C). That is, the F layer preferably contains a fired product of the polymer I and the polymer II. In such a case, the respective polymers, particularly the polymer II may be partly fired or may be completely fired.

As a method of heating the substrate, a method of using an oven, a method of using a circulating-air oven or a method of irradiation with heat rays (infrared rays) may, for example, be mentioned.

The atmosphere in which the substrate is heated may be either under normal pressure or under elevated pressure. Further, the atmosphere in which the substate is held may be any of an oxidizing gas (e.g. oxygen gas), a reducing gas (e.g. hydrogen gas) and an inert gas (e.g. helium gas, neon gas, argon gas or nitrogen gas).

The time for heating the substrate is usually from 0.5 to 30 minutes.

For example, in a case where a dispersion containing the PTFE powder as the powder II, the polymer (fd) as the dispersing agent and the aqueous dispersion medium as the liquid dispersion medium, is used, it is preferred that the dispersion is applied to the surface of a substrate, and the substrate is heated to 200 to 280°C and further heated to 300 to 400°C to form the F layer. Before the substrate is heated to 200 to 280°C, it may be heated to 80 to 150°C.

The thickness of the F layer to be formed is preferably at most 50 µm, more preferably at most 30 µm, further preferably at most 15 µm, particularly preferably at most 10 µm. The thickness of the F layer is preferably at least 0.1 µm, more preferably at least 1 µm, particularly preferably at least 4 µm. Within such a range, a F layer excellent in crack resistance can easily be formed without impairing physical properties of the polymer II.

The peel strength of the F layer to be formed and the substrate is preferably at least 10 N/cm, more preferably at least 12 N/cm, particularly preferably at least 15 N/cm. The peel strength is preferably at most 100 N/cm. By using the dispersion of the present invention, a laminate having the substrate and the F layer strongly bonded can easily be formed without impairing the physical properties of the polymer II.

The substrate is not particularly limited and may, for example, be a metal substrate of e.g. copper, aluminum or iron, a glass substrate, a resin substrate, a silicon substrate or a ceramic substrate.

The shape of the substrate is also not particularly limited and may be any of planer, curved and irregular, and may be any of a foil shape, a plate shape, a film shape and fibrous.

As specific examples of the laminate of the present invention, a resin-provided metal foil wherein the substrate is a metal foil (resin-provided metal foil of the present invention) may be mentioned.

An adhesive layer may separately be formed between the metal foil and the F layer, however, an adhesive layer is not necessarily formed since the F layer formed of the dispersion of the present invention is excellent in adhesion.

As a preferred embodiment of the metal foil, a copper foil such as a rolled copper foil or an electrolytic copper foil may be mentioned. In the resin-provided metal foil of the present invention, the thickness of the metal foil is preferably from 3 to 18 µm, and the thickness of the F layer is preferably from 1 to 50 µm.

The resin-provided metal foil of the present invention may be used as a printed board of which the F layer functions as an electrically insulating layer, by forming a patter circuit on the metal foil. In such a case, to form a through-hole on the printed board having a pattern circuit formed on both surfaces of the electrical insulating layer, NC drilling, carbon dioxide gas laser irradiation or UV-YAG laser irradiation may be employed. For UV-YAG laser irradiation, it is preferred that the F layer shows a predetermined absorbance at the third harmonic (wavelength: 355 nm) or the fourth harmonic (wavelength: 266 nm). With respect to the resin-provided metal foil of the present invention, the F layer showing such a predetermined absorbance can easily be formed by further blending an ultraviolet absorber, a pigment (such as alumina, zinc oxide or titanium oxide), a curing agent (such as triallyl isocyanurate) or the like with the dispersion of the present invention, or by adjusting the heating temperature for formation of the F layer.

Further, on an inner wall surface of the through-hole formed, a plating layer may be formed. The plating layer may be formed by any of etching treatment with metal sodium, treatment with a permanganic acid solution and plasma treatment, and the plating layer can efficiently be formed by the treatment with a permanganic acid solution or the plasma treatment since the polymer I as a polar polymer is contained in the F layer.

As a specific example of the laminate of the present invention, a polyimide film having the F layer formed of the dispersion of the present invention on at least one surface of the polyimide film, the polyimide film functioning as the substrate, may also be mentioned. Such a laminate is useful as an insulating covering.

An adhesive layer may separately be formed between the polyimide film and the F layer, however, an adhesive layer is not necessarily formed since the F layer formed of the dispersion of the present invention is excellent in adhesion.

As a preferred embodiment of the polyimide film, a film of a polymer of a component containing as the main component 2,2',3,3'- or 3,3',4,4'-biphenyltetracarboxylic dianhydride (such as 3,3',4'-benzophenone tetracarboxylic dianhydride or 3,3',4'-biphenyltetracarboxylic dianhydride) and a component containing p-phenylenediamine as the main component may be mentioned. As specific examples of the polyimide film, Apical Type AF (manufactured by Kaneka North America LLC) may be mentioned.

The insulating covering has a mass of preferably at most 23.5 g/m² and a loop stiffness of preferably at least 0.45 g/cm.

In the insulating covering, each F layer preferably has a thickness of from 1 to 200 µm, particularly preferably from 5 to 20 µm. Further, the polyimide film has a thickness of particularly preferably from 5 to 150 µm.

The insulating covering is excellent in e.g. electrical insulating properties, abrasion resistance and hydrolysis resistance, is useful as an electrical insulating tape, or a packaging material for an electrical cable or an electrical wire, and is particularly useful as an electrical wire material or a cable material for aerospace industry and for electric automobiles.

When the dispersion of the present invention is applied to the surface of a substrate, the substrate is heated to form the F layer containing the polymer I and the polymer II thereby to obtain a laminate having the substrate and the F layer containing the polymer I and the polymer II laminated in this order, more excellent in the crack resistance and the adhesion, the content ratio of the polymer I and the polymer II is not particularly limited.

Since the laminate of the present invention contains the F excellent in the crack resistance without impairing the physical properties of the polymer II, containing the polymer I and excellent in adhesion, a laminate having another material further laminated on the F layer of the laminate of the present invention may be produced.

By contact-bonding the surface of the F layer of the laminate of the present invention and a second substrate, a composite laminate having the first substrate (the substrate in the laminate of the present invention, the same applies hereinafter), the F layer and the second substrate laminated in this order is obtained.

The second substrate may be any of a metal substrate of e.g. copper, aluminum or iron, a glass substrate, a resin substrate, a silicon substrate or a ceramic substrate. The shape of the second substrate may be any of planer, curved or irregular. The substrate may be any of a foil, a plate, a film or fibrous.

As specific examples of the second substrate, a heat resistant resin substrate or a prepreg which is a precursor for a fiber-reinforced resin plate may, for example, be mentioned.

A prepreg is a sheet-shaped substrate having a substrate (such as tow or woven fabric) of reinforce fibers (such as glass fibers or carbon fibers) impregnated with a resin (such as the above thermosetting resin or thermoplastic resin).

The heat resistant resin substrate is preferably a film containing a heat resistant resin, and may be either a single layer or a multilayer.

The heat resistant resin may, for example, be a polyimide, a polyarylate, a polysulfon, a polyarylsulfone, an aromatic polyamide, an aromatic polyetheramide, polyphenylene sulfide, polyaryl ether ketone, polyamideimide, liquid crystalline polyester or polytetrafluoroethylene.

As a method of contact-bonding the surface of the F layer of the laminate of the present invention and the second substrate, thermo-compression method may be mentioned.

In a case where the second substrate is a prepreg, the thermo-compression temperature in the thermo-compression method is preferably from 120 to 300°C, particularly preferably from 160 to 220°C. Within such a range, the F layer and the prepreg can be strongly bonded while heat deterioration of the prepreg is suppressed.

In a case where the second substrate is a heat resistant resin substrate, the thermo-compression temperature is preferably from 300 to 400°C. Within such a range, the F layer and the heat resistant resin substrate can be strongly bonded while heat deterioration of the heat resistant resin substrate is suppressed.

The thermo-compression method is carried out preferably in a reduce pressure atmosphere, particularly preferably in a degree of vacuum of at most 20 kPa. Within such a range, inclusion of bubbles between interfaces of the substrate, the F layer and the second substrate in the composite laminate can be suppressed, and deterioration by oxidation can be suppressed. Further, at the time of thermo-compression, the temperature is preferably increased after the degree of vacuum is achieved.

The pressure at the time of thermo-compression is preferably at least 0.2 MPa. Further, the upper limit of the pressure is preferably at most 10 MPa. Within such a range, the F layer and the second substrate can be strongly bonded while breakage of the composite laminate is suppressed.

By applying a liquid layer-forming material for forming a second polymer layer on the surface of the F layer of the laminate of the present invention to form a second polymer layer, a composite laminate having the first substrate, the F layer and the second polymer layer laminated in this order is obtained.

The liquid layer-forming material is not particularly limited, and the dispersion of the present invention may be used.

The method for forming the second polymer layer is also not particularly limited, and is properly determined by the properties of the liquid layer-forming material used. For example, in a case where the layer-forming material is the dispersion of the present invention, the second polymer layer may be formed in accordance with the same method for forming the F layer under the same conditions as in the method for producing the laminate of the present invention. That is, when the layer-forming material is the dispersion of the present invention, a plurality of F layers containing the polymer I and the polymer II may be formed, whereby the whole F layer containing the polymer I and the polymer II may easily be formed into a thick layer.

As specific examples of the composite laminate of the present invention, a composite laminate obtained by using the dispersion of the present invention or a dispersion containing no powder I and containing the powder II, as the liquid layer-forming material, may be mentioned. Since the second polymer layer is formed on the polymer layer having strong adhesion, a composite laminate having high peel strength can be obtained even by using the latter dispersion. Such a composite laminate can suitable be used as an embodiment of the resin-provided metal foil of the present invention or the insulating covering of the present invention.

According to the present invention, the F layer containing the polymer I and the polymer II excellent in crack resistance without impairing physical properties of the polymer II is formed. By removing the substrate of the laminate of the present invention, a film containing the polymer I and the polymer II is obtained.

To remove the substrate, a removal method of peeling the substrate from the laminate of the present invention or a removal method of dissolving the substrate from the laminate of the present invention may be mentioned. For example, in a case where the substrate of the laminate of the present invention is a copper foil, by bringing hydrochloric acid into contact with the substrate surface of the laminate of the present invention, the substrate is dissolve and removed, whereby the film can easily be obtained.

The contents of the polymer I and the polymer II, and the content ratio of the polymer I and the polymer II in the film of the present invention, are as defined for the dispersion of the present invention, including the preferred embodiments.

The thickness of the film of the present invention is preferably at most 50 µm, more preferably at most 30 µm, further preferably at most 15 µm, particularly preferably at most 10 µm. The lower limit of the thickness of the film is not particularly limited and is preferably at least 1 µm, particularly preferably at least 4 µm. Within such a range, the film will be more excellent in the adhesion and crack resistance without impairing physical properties of the polymer II.

By impregnating a woven fabric with the dispersion of the present invention and drying by heating, a woven fabric impregnated with the polymer I and the polymer II (impregnated woven fabric of the present invention) is obtained. The impregnated woven fabric of the present invention is preferably covered woven fabric covered with the F layer.

In production of the impregnated woven fabric of the present invention, the polymer I, the powder I, the polymer II, the powder II, the dispersing agent and the liquid dispersion medium are as defined for the dispersion of the present invention, including the preferred embodiments.

The woven fabric is not particularly limited so long as it is a heat resistant woven fabric which can withstand drying, and is preferably glass fiber woven fabric, carbon fiber woven fabric, aramid fiber woven fabric or metal woven fabric, more preferably glass fiber woven fabric or carbon fiber woven fabric, and from the viewpoint of the electrical insulating properties, particularly preferably plain glass fiber woven fabric composed of electrically insulating E-glass yarn as defined by JIS R3410. The woven fabric may be treated with a silicane coupling agent with a view to improving the adhesion to the F layer, however, it may not be treated with a silane coupling agent since the F layer formed of the dispersion of the present invention is excellent in adhesion.

The total content of the polymer I and the polymer II in the impregnated woven fabric is preferably from 30 to 80 mass%.

As a method of impregnating the woven fabric with the dispersion of the present invention, a method of dipping the woven fabric in the dispersion or a method of applying the dispersion to the woven fabric may be mentioned. The number of dipping in the former method and the number of application in the latter method may be once, or twice or more. By the method for producing the impregnated woven fabric of the present invention, since the dispersion containing the polymer I excellent in adhesion to other material is used, an impregnated woven fabric having a high polymer content, having the woven fabric and the polymer strongly bonded, can be obtained regardless of the number of dipping or application.

The method of drying the woven fabric may properly be determined depending upon the type of the liquid dispersion medium contained in the dispersion, and for example, in a case where the liquid dispersion medium is water, a method of making the woven fabric run through an air drying oven at from 80 to 120°C may be mentioned.

When the woven fabric is dried, the polymer may be fired. The method of firing the polymer may properly be determined depending upon the types of the polymer I and the polymer II, and for example, a method of making the woven fabric run through an air drying oven at from 300 to 400°C may be mentioned. Drying of the woven fabric and firing the polymer may be conducted in a single step.

The impregnated woven fabric obtained by the production method of the present invention is excellent in properties such that the adhesion between the F layer and the woven fabric is high since the F layer contains the polymer I, the surface smoothness is high, and distortion is small. A resin-provided metal foil obtained by thermo-compression of such an impregnated woven fabric and a metal foil, has high peel strength and is hardly warped, and is thereby useful as a printed board material.

Further, in the method for producing the impregnated woven fabric of the present invention, the woven fabric impregnated with the dispersion may be applied to the surface of a substrate, followed by drying by heating, whereby an impregnated woven fabric layer containing the polymer I, the polymer II and the woven fabric is formed to produce a laminate having the substrate and the impregnated woven fabric layer laminated in this order. Th embodiment is not particularly limited, and a woven fabric impregnated with the dispersion may be applied to a part of an inner wall surface of a formed product such as a tank a pipe or a container, followed by heating while the formed product is rotated, whereby an impregnated woven fabric layer can be formed on the entire inner wall surface of the formed product. Such a production method is useful also as a method of lining the inner wall surface of a formed product such as a tank, a pipe or a container.

### EXAMPLES

Now, the present invention will be described in further detail with reference to Examples. However, it should be understood that the present invention is by no means restricted thereto.

Various measurement methods are described below.

### <D50 (average particle size) and D90 of powder>

Using a laser diffraction/scattering particle size distribution measuring apparatus (manufactured by HORIBA, Ltd., LA-920 measuring apparatus), D50 and D90 were measured with respect to the powder dispersed in water.

### <Peel strength of laminate>

The laminate was cut into a rectangle (length: 100 mm, width: 10 mm), and a position 50 mm from one end in the length direction was fixed, and the metal foil and the F layer were peeled at an angle of 90° to the laminate from one end in the length direction at a pulling rate of 50 mm/min, and the maximum load applied was taken as the peel strength (N/cm).

### [Polymer and powder]

Polymer I¹: a copolymer containing TFE units, NAH units and PPVE units in amounts of 97.9 mol%, 0.1 mol% and 2.0 mol%, respectively (melting point: 300°C).

Powder I¹: a powder comprising the polymer I¹, having D50 of 1.7 µm and D90 of 3.8 µm.

Powder I²: a powder comprising the polymer I¹, having D50 of 0.3 µm and D90 of 1.8 µm. This powder is obtained by subjecting the powder I¹ to a wet jet mill.

Dispersion (p2¹): an aqueous dispersion (manufactured by AGC Inc., product No. AD-911E) of PTFE, containing 50 mass% of powder II¹ (D50: 0.3 µm) comprising PTFE. The dispersion (p2¹) is a dispersion belonging to the dispersion (p2), and the PTFE is non-melt-formable.

### [Dispersing agent]

Dispersing agent 1: F(CF₂)₆CH₂(OCH₂CH₂)₇OCH₂CH(CH₃)OH (fluorine content: 34 mass%, hydroxy value: 78 mgKOH/g).

Dispersing agent 2: a copolymer of CH₂=CHC(O)OCH₂CH₂CH₂CH₂OC(CF₃)(=C(CF(CF₃)₂)₂) and CH₂=CHC(O)O(CH₂CH₂O)₁₀H (fluorine content: 40 mass%, hydroxy value: 56 mgKOH/g).

Dispersing agent 3: a copolymer containing units based on CH₂=C(CH₃)C(O)OCH₂CH₂(CF₂)₆F and units based on CH₂=C(CH₃)C(O)(OCH₂CH₂)₂₃OH (fluorine content: 35 mass%, hydroxy value: 19 mgKOH/g).

Dispersing agent 4: a homopolymer of CH₂=CHC(O)OCH₂CH₂(CF₂)₆F.

### [Ex. 1] Example of production of powder dispersion

### [Ex. 1-1] Example of production of dispersion 1

45 Parts by mass of the powder I¹, 5 parts by mass of the dispersing agent 2 and 50 parts by mass of water were mixed to prepare dispersion (p1¹) which is a dispersion belonging to the dispersion (p1).

The dispersion (p2¹) and the dispersion (p1¹) were mixed to obtain dispersion 1 having the powder I¹ and the powder II² dispersed in water, having a ratio (mass ratio) of the polymer I¹ to PTFE and having a pH of from 5 to 7. To mix the dispersion (p1¹) and the dispersion (p2¹), immediately before mixing, 15 kg of the dispersion (p1¹) was treated by a homodisper at 3,000 rpm and further treated by a homogenizer at 3,000 rpm. Even after the dispersion 1 was stored for a long time, the color did not change.

### [Ex. 1-2 to 1-4] Examples of production of dispersions 2 to 4

Dispersions were obtained in the same manner as in Ex. 1-1 except that the ratio (mass ratio) of the polymer I¹ to the polymer II¹ was changed to 0.4 (dispersion 2, Ex. 1-2), 1.0 (dispersion 3, Ex. 1-3 not in accordance with the present invention) or 4.0 (dispersion 4, Ex. 1-4 not in accordance with the present invention).

### [Ex. 1-5] Example of production of dispersion 5

Dispersion 5 was obtained in the same manner as in Ex. 1-1 except that the dispersing agent 1 was used instead of the dispersing agent 2.

### [Ex. 1-6] Example of production of dispersion 6

Dispersion 6 was obtained in the same manner as in Example 1-1 except that the powder I² was used instead of the powder I¹, and the dispersing agent 1 was used instead of the dispersing agent 2.

### [Ex. 2] Example of production of laminate and film

The dispersion 1 was applied to the surface of a copper foil (thickness: 18 µm), dried at 100°C for 10 minutes, fired in an inert gas atmosphere at 380°C for 10 minutes and annealed to obtain a laminate (resin-provided copper foil) comprising the copper foil and a F layer (thickness: 5 µm) containing the polymer I¹ and PTFE formed on the surface of the copper foil. The peel strength of the laminate was 16 N/cm, and the surface of the F layer formed a fibrous surface derived from PTFE. Further, the copper foil of the resin-provided copper foil was removed with hydrochloric acid to obtain a film (thickness: 5 µm) containing the polymer I¹ and PTFE.

Laminates were produced in the same manner except that the dispersions 2, 3, 4 and (p2¹) were used instead of the dispersion 1, and the peel strength and the surface property of the F layer were evaluated. The results are shown in Table 1. The "polymer ratio" in Table 1 is the ratio (mass ratio) of the content of the polymer I¹ to the content of PTFE contained in the dispersion used.

**[Table 1]**

| Type of dispersion | Polymer ratio | Peel strength [N/cm] | F layer surface property |
|---|---|---|---|
| 1 | 0.1 | 16 | Fibrous |
| 2 | 0.4 | 17 | Fibrous |
| 3 | 1.0 | 19 | Non-fibrous |
| 4 | 4.0 | 17 | Non-fibrous |
| (p2¹) | 0 | <1 | Fibrous |

### [Ex. 3] Example of evaluation of crack resistance

To a surface of a stainless steel plate (thickness: 0.5 mm) having a plastic tape bonded on one edge side, the dispersion 2 was applied, and a rod was made to slide along the edge side to uniformly spread the dispersion 2 on the surface of the stainless steel plate. The stainless steel plate was dried at 100°C for 3 minutes three times and further heated at 380°C for 10 minutes to obtain a stainless steel plate having a F layer containing the polymer I¹ and PTFE and having an inclined thickness due to the thickness of the plastic tape bonded to the edge side, formed on the surface of the stainless steel plate. The stainless steel plate was visually confirmed, and the thickness of the F layer at the tip (a portion at which the F layer was thinnest) at which a crack line formed, measured by MINITEST 3000 (manufactured by Electro Physik), was 5.8 µm.

Evaluation was conducted in the same manner except that the dispersions 4 and (p2¹) were used instead of the dispersion 2, and the results are shown in Table 2.

**[Table 2]**

| Type of dispersion | Polymer ratio | Crack tip thickness [µm] |
|---|---|---|
| 2 | 0.4 | 5.8 |
| 4 | 4.0 | 15.2 |
| (p2¹) | 0 | 3.4 |

### [Ex. 4] Examples of evaluation of storage stability of powder dispersion

The dispersions 1, 5 and 6 are left at rest at 25°C for 10 days, and the appearance of each dispersion after being left at rest is visually confirmed, whereupon sediment is confirmed in the dispersions 1 and 5, but no sediment is confirmed in the dispersion 6.

### [Ex. 5] Example of production of powder dispersion

A dispersion (p1¹) comprising 30 parts by mass of the powder I², 5 parts by mass of the dispersing agent 1 and 65 parts by mass of water, and the dispersion (p2¹) were mixed to obtain dispersion 11 having the respective powders dispersed in water, containing 90 mass% of PTFE and 10 mass% of the polymer I¹ to the total amount of PTFE and the polymer I¹, and having a pH of from 5 to 7. The ratio (mass ratio) of the polymer I¹ to PTFE was 0.11, and the ratio (mass ratio) of the dispersing agent 1 to the total amount of PTFE and the polymer I¹ was 0.017. Even after the dispersion 11 was stored for long time, its color did not change.

Dispersions 12 to 15 were obtained in the same manner except that the types of the components and the proportions of the polymers mixed were changed. The composition of each dispersion, and evaluation results of the storage stability and crack resistance, are shown in Table 2.

**[Table 3]**

| Type of dispersion | Type of powder | Type of dispersing agent | Polymer ratio | Storage stability | Crack resistance |
|---|---|---|---|---|---|
| 11 | I² | 1 | 0.11 | ○ | ○ |
| 12 | I² | 1 | 0.67 | ○ | ○ |
| 13 | I² | 3 | 0.11 | ○ | **Δ** |
| 14 | I¹ | 3 | 0.11 | **Δ** | ○ |
| 15 | I¹ | 4 | 0.11 | × | × |

The storage stability and the crack resistance were evaluated by the following methods.

### <Storage stability>

The dispersion after left at rest at 25°C for 1 week was visually confirmed and evaluated based on the following standards.
○: No sediment confirmed.
△: Sediment confirmed but dispersed again when shaken by a hand.
×: Sediment confirmed and not dispersed again even when shaken by a hand.

### <Crack resistance>

To a surface of a stainless steel plate (thickness: 0.5 mm) having a plastic tape bonded on one edge side, the dispersion was applied, and a rod was made to slide along the edge side to uniformly spread the dispersion, followed by drying at 100°C for 3 minutes three times and by heating at 340°C for 10 minutes to form a F layer having an inclined thickness due to the thickness of the plastic tape bonded to the edge side on the surface of the stainless steel plate. The stainless steel plate was visually confirmed, and the thickness of the polymer layer at the tip (a portion at which the polymer layer was thinnest) at which a crack line formed was measured by MINITEST 3000 (manufactured by Electro Physik) and evaluated based on the following standards.
○: The thickness of the F layer at the tip at which crack formed being at least 10 µm.
△: The thickness of the F layer at the tip at which crack formed being at least 5 µm and less than 10 µm.
×: The thickness of the F layer at the tip at which crack formed being less than 5 µm.

### [Ex. 6] Example of production of laminate

The dispersion 11 was applied to the surface of a copper foil, dried at 100°C for 10 minutes, fired in an inert gas atmosphere at 340°C for 10 minutes and annealed, whereby a laminate (resin-provided copper foil) comprising the copper foil and a F layer (thickness: 5 µm) containing the polymer I¹ and PTFE formed on the surface of the copper foil.

Laminates were produced in the same manner except that the dispersions 12 to 15 and (p2¹) were used instead of the dispersion 11. With respect to each laminate, results of observation of SEM images (magnification of 30,000) of the surface of the F layer, results of measurement of the peel strength, and results of evaluation of the smoothness of the F layer are shown in Table 4.

**[Table 4]**

| Type of dispersion | F layer surface property | Peel strength | Smoothness |
|---|---|---|---|
| 11 | Fibrous | ○ | ○ |
| 12 | Non-fibrous | ○ | ○ |
| 13 | Fibrous | ○ | ○ |
| 14 | Fibrous | ○ | ○ |
| 15 | Fibrous | Δ | × |
| (p21) | Fibrous | × | Not evaluated |

The peel strength and the smoothness were evaluated based on the following standards.

### <Peel strength>

○: The peel strength being at least 10 N/cm.
△: The peel strength being at least 1 N/cm and less than 10 N/cm.
×: The peel strength being less than 1 N/cm.

### <Smoothness>

The F layer side of the laminate was irradiated with light, and the F layer was visually observed from obliquely above, and evaluated based on the following standards.
○: No hard spot confirmed.
×: Hard spot confirmed.

### [Ex. 7] Example of production of film

### [Ex. 7-1] Example of production of film 13

The dispersion 13 was applied to the surface of the coper foil, dried at 100°C for 10 minutes, fired in an inert gas atmosphere at 340°C for 10 minutes and annealed, whereby a laminate comprising the copper foil and a F layer containing the polymer I¹ and PTFE formed on the surface of the copper foil was obtained. Application of the dispersion to the surface of the polymer layer of the laminate, drying and firing were repeated under the same conditions to increase the thickness of the F layer to 30 µm. Then, the copper foil of the laminate was removed with hydrochloric acid to obtain film 13 containing polymer I¹ and PTFE. The film 13 was oriented (degree of orientation: 200%) to obtain oriented film 13.

### [Ex. 7-2] Example of production of film 14 and film (p2¹)

Film 14 and film (p2¹) were obtained respectively from the dispersion 14 and the dispersion (p2¹) in the same manner as in Ex. 7-1 except that the type of the dispersion was changed. The polymer films were respectively oriented in the same manner as in Ex. 7-1 to obtain oriented film 14 and oriented film (p2¹).

The respective films were porous films, and as a result of comparison of their pores, the oriented film 13, the oriented film 14 and the oriented film (p2¹) had a smaller pore size distribution in ascending order, and were denser in descending order.

### INDUSTRIAL APPLICABILITY

The dispersion of the present invention is capable of easily forming a fluoroolefin polymer layer excellent in adhesion and crack resistance, can be used for production of a formed product such as a film, an impregnated product (such as a prepreg) or a laminated plate (a metal laminated plate such as a resin-provided copper film), and is useful for production of a formed product which is required to have mold release property, electrical properties, water/oil repellency, chemical resistance, weather resistance, heat resistance, sliding properties, abrasion resistance, etc. The formed product obtained according to the present invention is useful as antenna members, printed boards, aircraft members, automobile members, sports goods, food industry goods, coating materials, cosmetics, etc., and specifically, useful as electric wire covering materials (such as electric wires for aircraft), electrically insulating tapes, insulating tapes for oil-drilling, materials for printed boards, separation membranes (microfiltration membrane, ultrafiltration membrane, reverse osmosis membrane, ion exchange membrane, dialysis membrane, gas separation membrane etc.), electrode binders (for lithium secondary battery, for fuel cell, etc.), a copy roll, furniture, a car dashboard, a cover for home electrical appliance, a slide member (load bearing, plain bearing, valve, bearing, gear, cam, belt conveyor, food transport belt, etc.), tools (shovel, file, drill, saw), a boiler, a hopper, a pipe, an oven, a baking pan, a chute, a die, a toilet bowl, and a container covering material.

## Claims

1. A powder dispersion comprising a powder of a first polymer having units based on tetrafluoroethylene and an oxygen-containing polar group, a powder of a second polymer containing units based on a fluoroolefin, wherein the second polymer is a polymer having no oxygen-containing polar group, a dispersing agent, and a liquid dispersion medium, wherein the ratio of the mass content of the first polymer to the mass content of the second polymer is at most 0.7.

2. The powder dispersion according to Claim 1, wherein the dispersing agent is an acetylene surfactant, a silicone surfactant or a fluorinated surfactant.

3. The powder dispersion according to Claim 1 or 2, wherein the average particle size of the powder of the first polymer is from 0.05 to 75 µm, and the average particle size of the powder of the second polymer is from 0.01 to 100 µm, wherein the average particle size is a volume-based cumulative 50% size of the powder, obtained by measuring a particle size distribution of the powder by laser diffraction/scattering method and taking the whole volume of the group of particles being 100%.

4. The powder dispersion according to any one of Claims 1 to 3, wherein the first polymer is a polymer having a melting temperature of from 140 to 320°C.

5. The powder dispersion according to any one of Claims 1 to 4, wherein the first polymer is a polymer having units based on tetrafluoroethylene, units based on hexafluoropropylene, a perfluoro(alkyl vinyl ether) or a fluoroalkylethylene, and units based on a monomer having an oxygen-containing polar group.

6. The powder dispersion according to any one of Claims 1 to 5, wherein the oxygen-containing polar group is a hydroxy group-containing group, a carbonyl group-containing group, an acetal group, a phosphono group or an oxacycloalkyl group.

7. The powder dispersion according to any one of Claims 1 to 6, wherein the second polymer is polytetrafluoroethylene, a copolymer of tetrafluoroethylene and a perfluoro(alkyl vinyl ether), a copolymer of tetrafluoroethylene and hexafluoropropylene, a copolymer of tetrafluoroethylene and ethylene, or polyvinylidene fluoride.

8. The powder dispersion according to any one of Claims 1 to 7, wherein the liquid dispersion medium is an aqueous dispersion medium.

9. The powder dispersion according to Claim 8, wherein the aqueous dispersion medium has a pH of from 5 to 7.

10. A method for producing a laminate, which comprises applying the powder dispersion as defined in any one of Claims 1 to 9 to a surface of a substrate and removing the liquid dispersion medium by heating to form a polymer layer containing the first polymer and the second polymer.

11. A method for producing a polymer-impregnated woven fabric, which comprises impregnating a woven fabric with the powder dispersion as defined in any one of Claims 1 to 9 and removing the liquid dispersion medium by heating to obtain a woven fabric containing the first polymer and the second polymer.

12. A laminate which comprises a polymer layer formed of the powder dispersion as defined in any one of Claims 1 to 9, containing the first polymer and the second polymer, and a substrate.

13. A film, formed of the powder dispersion as defined in any one of Claims 1 to 9, containing the first polymer and the second polymer.

14. A polymer-impregnated woven fabric, formed of the powder dispersion as defined in any one of Claims 1 to 9, containing the first polymer and the second polymer.

## Patentansprüche

1. Pulverdispersion, umfassend ein Pulver eines ersten Polymers mit Einheiten auf der Basis von Tetrafluorethylen und einer sauerstoffhaltigen polaren Gruppe, ein Pulver eines zweiten Polymers mit Einheiten auf der Basis eines Fluorolefins, wobei das zweite Polymer ein Polymer ohne sauerstoffhaltige polare Gruppe ist, ein Dispergiermittel und ein flüssiges Dispersionsmedium, wobei das Verhältnis des Massengehalts des ersten Polymers zum Massengehalt des zweiten Polymers höchstens 0,7 beträgt.

2. Pulverdispersion nach Anspruch 1, wobei das Dispergiermittel ein grenzflächenaktives Mittel auf der Basis von Acetylen, ein grenzflächenaktives Mittel auf der Basis von Silikon oder ein fluoriertes grenzflächenaktives Mittel ist.

3. Pulverdispersion nach Anspruch 1 oder 2, wobei die durchschnittliche Partikelgröße des Pulvers des ersten Polymers 0,05 bis 75 µm und die durchschnittliche Partikelgröße des Pulvers des zweiten Polymers 0,01 bis 100 µm beträgt, wobei die durchschnittliche Partikelgröße eine auf dem Volumen basierende kumulative 50%-Größe des Pulvers ist, die durch Messung einer Partikelgrößenverteilung des Pulvers mittels Laserbeugung/Streuungsmethode erhalten wird, wobei das gesamte Volumen der Gruppe von Partikeln 100% beträgt.

4. Pulverdispersion nach einem der Ansprüche 1 bis 3, wobei das erste Polymer ein Polymer mit einer Schmelztemperatur von 140 bis 320°C ist.

5. Pulverdispersion nach einem der Ansprüche 1 bis 4, wobei das erste Polymer ein Polymer mit Einheiten auf Basis von Tetrafluorethylen, Einheiten auf Basis von Hexafluorpropylen, einem Perfluor(alkylvinylether) oder einem Fluoralkylethylen, und Einheiten auf Basis eines Monomers mit einer sauerstoffhaltigen polaren Gruppe ist.

6. Pulverdispersion nach einem der Ansprüche 1 bis 5, wobei die sauerstoffhaltige polare Gruppe eine hydroxylgruppenhaltige Gruppe, eine carbonylgruppenhaltige Gruppe, eine Acetalgruppe, eine Phosphonogruppe oder eine Oxacycloalkylgruppe ist.

7. Pulverdispersion nach einem der Ansprüche 1 bis 6, wobei das zweite Polymer Polytetrafluorethylen, ein Copolymer aus Tetrafluorethylen und einem Perfluor(alkylvinylether), ein Copolymer aus Tetrafluorethylen und Hexafluorpropylen, ein Copolymer aus Tetrafluorethylen und Ethylen oder Polyvinylidenfluorid ist.

8. Pulverdispersion nach einem der Ansprüche 1 bis 7, wobei das flüssige Dispersionsmedium ein wässriges Dispersionsmedium ist.

9. Pulverdispersion nach Anspruch 8, wobei das wässrige Dispersionsmedium einen pH-Wert von 5 bis 7 aufweist.

10. Verfahren zur Herstellung eines Laminats, welches das Aufbringen der Pulverdispersion nach einem der Ansprüche 1 bis 9 auf eine Oberfläche eines Substrats und das Entfernen des flüssigen Dispersionsmediums durch Erhitzen umfasst, um eine Polymerschicht, enthaltend das erste Polymer und das zweite Polymer, zu bilden.

11. Verfahren zur Herstellung eines polymerimprägnierten Gewebes, welches das Imprägnieren eines Gewebes mit der Pulverdispersion nach einem der Ansprüche 1 bis 9 und das Entfernen des flüssigen Dispersionsmediums durch Erhitzen umfasst, um ein Gewebe, enthaltend das erste Polymer und das zweite Polymer, zu erhalten.

12. Laminat, welches eine Polymerschicht, gebildet aus der Pulverdispersion nach einem der Ansprüche 1 bis 9, enthaltend das erste Polymer und das zweite Polymer, und ein Substrat umfasst.

13. Folie, gebildet aus der Pulverdispersion nach einem der Ansprüche 1 bis 9, enthaltend das erste Polymer und das zweite Polymer.

14. Polymerimprägniertes Gewebe, gebildet aus der Pulverdispersion nach einem der Ansprüche 1 bis 9, enthaltend das erste Polymer und das zweite Polymer.

## Revendications

1. Dispersion de poudre comprenant une poudre d'un premier polymère comportant des unités à base de tétrafluoroéthylène et un groupe polaire contenant de l'oxygène, une poudre d'un second polymère contenant des unités à base d'une fluorooléfine, le second polymère étant un polymère ne comportant pas de groupe polaire contenant de l'oxygène, et un agent de dispersion et un milieu de dispersion liquide, le rapport de la teneur massique du premier polymère à la teneur massique du second polymère étant de 0,7 au maximum.

2. La dispersion de poudre selon la Revendication 1, dans laquelle l'agent de dispersion est un tensioactif d'acétylène, un tensioactif de silicone ou un tensioactif fluoré.

3. La dispersion de poudre selon les Revendications 1 ou 2, dans laquelle la dimension moyenne des particules de la poudre du premier polymère est comprise entre 0,05 et 75 µm, et la dimension moyenne des particules de la poudre du second polymère est comprise entre 0,01 et 100 µm, la dimension moyenne des particules étant une dimension de 50 % cumulatif fondé sur le volume de la poudre, obtenue par mesure d'une répartition de la dimension des particules de la poudre à l'aide d'un procédé de diffraction/diffusion laser et considérant que le volume entier du groupe de particules est de 100 %.

4. La dispersion de poudre selon l'une quelconque des Revendications 1 à 3, dans laquelle le premier polymère est un polymère présentant une température de fusion comprise entre 140 et 320 °C.

5. La dispersion de poudre selon l'une quelconque des Revendications 1 à 4, dans laquelle le premier polymère est un polymère comportant des unités à base de tétrafluoroéthylène, des unités à base d'hexafluoropropylène, un perfluoro(alkyl vinyl éther) ou un fluoroalkyléthylène, et des unités à base d'un monomère comportant un groupe polaire contenant de l'oxygène.

6. La dispersion de poudre selon l'une quelconque des Revendications 1 à 5, dans laquelle le groupe polaire contenant de l'oxygène est un groupe contenant un groupe hydroxy, un groupe contenant un groupe carbonyle, un groupe acétal, un groupe phosphono ou un groupe oxacycloalkyle.

7. La dispersion de poudre selon l'une quelconque des Revendications 1 à 6, dans laquelle le second polymère est le polytétrafluoroéthylène, un copolymère de tétrafluoroéthylène et d'un perfluoro(alkyl vinyl éther), un copolymère de tétrafluoroéthylène et d'hexafluoropropylène, un copolymère de tétrafluoroéthylène et d'éthylène, ou le fluorure de polyvinylidène.

8. La dispersion de poudre selon l'une quelconque des Revendications 1 à 7, dans laquelle le milieu de dispersion liquide est un milieu de dispersion aqueux.

9. La dispersion de poudre selon la Revendication 8, dans laquelle le milieu de dispersion aqueux présente un pH compris entre 5 et 7.

10. Procédé de production d'un stratifié, le procédé comprenant l'application de la dispersion de poudre, telle que définie dans l'une quelconque des Revendications 1 à 9, à une surface d'un substrat et l'élimination du milieu de dispersion liquide par chauffage, afin de former une couche de polymère contenant le premier polymère et le second polymère.

11. Procédé de production d'un tissu tissé imprégné de polymère, le procédé comprenant l'imprégnation d'un tissu tissé avec la dispersion de poudre telle que définie dans l'une quelconque des Revendications 1 à 9 et l'élimination du milieu de dispersion liquide par chauffage, afin d'obtenir un tissu tissé contenant le premier polymère et le second polymère.

12. Stratifié comprenant une couche de polymère composée de la dispersion de poudre telle que définie dans l'une quelconque des Revendications 1 à 9, contenant le premier polymère et le second polymère, et un substrat.

13. Film composé de la dispersion de poudre telle que définie dans l'une quelconque des Revendications 1 à 9, contenant le premier polymère et le second polymère.

14. Tissu tissé imprégné de polymère, composé de la dispersion de poudre telle que définie dans l'une quelconque des Revendications 1 à 9, contenant le premier polymère et le second polymère.
